(19) Europäisches Patentamt
European Patent Office
Office européen des brevets

(11) **EP 2 001 114 B1**

(12) **EUROPEAN PATENT SPECIFICATION**

(45) Date of publication and mention
of the grant of the patent:
**04.05.2011   Bulletin 2011/18**

(51) Int Cl.:
***H02M 3/335*** (2006.01)

(21) Application number: **07109760.4**

(22) Date of filing: **06.06.2007**

(54) **Multi-output forward converter with independent and precise regulation**

Durchflusswandler mit mehreren Ausgängen und unabhängiger, präziser Regelung

Convertisseur direct à sorties multiples doté d'une régulation indépendante et précise

(84) Designated Contracting States:
**AT BE BG CH CY CZ DE DK EE ES FI FR GB GR HU IE IS IT LI LT LU LV MC MT NL PL PT RO SE SI SK TR**

(43) Date of publication of application:
**10.12.2008   Bulletin 2008/50**

(73) Proprietors:
• **Ertike, Sükrü**
**34590 Istanbul (TR)**
• **Yildirim, Deniz**
**34469 Istanbul (TR)**

(72) Inventors:
• **Ertike, Sükrü**
**34590 Istanbul (TR)**
• **Yildirim, Deniz**
**34469 Istanbul (TR)**

(74) Representative: **Sevinç, Erkan**
**Istanbul Patent & Trademark Consultancy Ltd.**
**Plaza-33, Büyükdere cad. No: 33/16**
**Sisli**
**34381 Istanbul (TR)**

(56) References cited:
**US-A1- 2003 090 247     US-B1- 6 369 525**

• **HAVANUR S: "Combining synchronous rectification and post regulation for multiple isolated outputs" APPLIED POWER ELECTRONICS CONFERENCE AND EXPOSITION, 2004. APEC '04. NINETEENTH ANNUAL IEEE ANAHEIM, CA, USA 22-26 FEB. 2004, PISCATAWAY, NJ, USA,IEEE, 22 February 2004 (2004-02-22), pages 872-877, XP010703615 ISBN: 0-7803-8269-2**
• **PAN S ET AL: "A Precisely-Regulated Multiple Output Forward Converter With Automatic Master-Slave Control" POWER ELECTRONICS SPECIALISTS, 2005 IEEE 36TH CONFERENCE ON JUNE 12, 2005, PISCATAWAY, NJ, USA,IEEE, 12 June 2005 (2005-06-12), pages 969-975, XP010883327 ISBN: 0-7803-9033-4**

## Description

## Technical Field of the Invention

The present invention pertains to a new topology and method for controlling multiple output forward converters.

## Background of the Invention

Forward converters are widely used in industry for variety of purposes such as computer power supplies, automotive and telecom applications. In case of a multi-load application, using one converter with multiple outputs rather than a point-of-use power supplies (PUPS) for each load greatly reduces cost and minimizes space requirement. In this respect, forward converters are good candidates for multi-load applications.

However, independent and precise voltage regulation of each output for operation with wide load ranges becomes a design problem for forward converters because of the cross-coupling effect between different outputs. Any load change in one output affects the voltages of other outputs. In applications where the loads are changing in wide ranges, conventional master-slave based control is not sufficient. For example, if the main output operates at no load while slave outputs operates at their rated (full) loads, controller will reduce duty cycle of main switch and the slave outputs will experience lack of power and will loose their regulations such that all slave output voltages decrease nearly to zero. On the other hand, while the main output operates at full load if any of the slave output operates at no load, in this case controller will increase duty cycle of the main switch to its maximum value and the slave output voltage will increase and loose regulation. Thus, only the main output can be regulated precisely in a master-slave based multi- output forward converter.

In multi load applications that require precise and independent regulation for each load voltage, conventional master-slave based control can not be used. Using multi-output forward converters for such applications necessarily requires some modifications in control and topological arrangements. Prior techniques also address above-cited disadvantages and make use of different topologies. One such example is use of magamps as post regulators, which is a saturable reactor used at one or more output as an additional switch (Wen Chau-Chun, Chen Chem-Lin, Chen Wei, Jiary Jian, "Magamp Post Regulation for Flyback Converter", IEEE, 2001). This method requires an extra resetting circuit for each Magamp and is a master-slave based solution. Main switch duty cycle must be higher than that of slave output; otherwise regulation is lost at the slave output. Implementation difficulty is a common drawback for this method. Another approach is the Weighted Voltage Mode Control (WVMC), in which two or more outputs are sensed simultaneously and the weighted sums of all output voltages are fed back (Chen, Q., Lee, F.C., Jovanovic, M.M., "Analysis and Design of Weighted Voltage Mode Control for a Multi-Output Forward Converter", Applied Power Electronics Conference and Exposition, pp:449 - 455, 7-11 March 1993). None of the outputs however, can be regulated precisely; there is always a steady-state error at each output. Error is distributed amongst the outputs. This method is not suitable for applications where loads are changing in wide load ranges.

A further method, requiring an additional boost converter for the regulation of each auxiliary output is the parallel limitation method (Ferreres, A., Carrasco, J.A., Espi, J.M., Casans, S., Dede, E.J., "Modeling of a Novel Parallel Regulation Technique in a Two Output Forward Converter", IEEE International Symposium on Industrial Electronics, Vol. 2, pp:607 - 612, 12-16 July 1999). This method greatly eliminates cross coupling between outputs. Although regulation performance is good, it becomes complicated as the number of outputs increases. It is a high cost solution because of the auxiliary converter (s).

Synchronous Switch Post Regulator (SSPR) which is very similar to forward converter with Magamp post regulation makes up another approach in which the regulation of auxiliary output depends on the loading rate of the main output (Lin Y., Liu K.H., "A New Synchronous Switch Post Regulator for Multi Output Forward Converters", APEC'90, pp.693-696, 1990). If the main output works at light load, auxiliary output may experience lack of power and loose output voltage regulation.

A further topology and control method suitable for providing regulation for wide load ranges is the voltage feed forward synchronous forward converter in which cross coupling between outputs is removed by post regulators (controllers). Topology and control method thereof requires short circuiting of output synchronous rectifiers; therefore additional current limiting inductances are necessary for each output (Xi Yauhao, Jain K. Praveen, "A Forward Converter Topology With Independently and Precisely Regulated Multiple Outputs", IEEE Transactions on Power Electronics, Vol.18, No. 2, pp. 648-658, 2003). Primary switch duty cycle is always kept nearly constant independent from outputs. Regulation of the $k^{th}$ output is constituted by adjusting the duty cycle of freewheeling MOSFET. A further circuit derived therefrom may comprise primary and secondary controllers coupled to obtain automatic master-slave selection (Xi Yauhao, Jain K. Praveen, "A Precisely-Regulated Multiple Output Forward Converter with Automatic Master Slave Control", IEEE 36th Power Electronics Specialists Conference, pp: 969 - 975, 2005).

Existing solutions to the problem of designing multi-output forward converters are either very complicated and/or costly or do not have enough performance with respect to voltage regulation. In other words, none of the above-given approaches provides a satisfactory result in terms of cross regulation, number of required magnetic elements and simplicity. Those offer either poor results in wide load ranges in terms of cross regulation or are considerably complex. The present invention proposes a new method for controlling multi-output forward converters involving both simplicity and high performance in terms of independent and precise regulation capability of each output.

On the other hand, patent literature relevant in the field indicates the following citations: US 6369525 discloses a white light-emitting-diode array driver circuit with a multiple output flyback (or forward) converter with output current mode control. The circuit comprises a power supply source and a transformer. The transformer has a primary winding coupled to, and configured to receive current from the power supply, and a plurality of secondary windings coupled to the primary winding.

US patent 2003/090247 discloses a multiple output voltage power supply comprises a transformer having a primary winding and a plurality of secondary windings. The primary winding is adapted to have an input voltage coupled thereto. A primary side switch is coupled to the primary winding and is adapted to control power applied to the transformer in a power cycle responsive to a peak current mode control signal. A plurality of output circuits are coupled to respective ones of the plurality of secondary windings and provide respective output voltages. The plurality of output circuits each further comprises a forward rectifier adapted to rectify power during a positive portion of the power cycle and a free-wheeling rectifier adapted to rectify power during a negative portion of the power cycle.

## Objects of the Invention

Primary object of the present invention is to provide a method and topology for controlling a multi-output forward converter in which every single output thereof can be regulated irrespective of each other by way of an easy, simple and effective method.

Another object of the present invention is to provide a method and topology for controlling a multi-output forward converter in which independent and precise regulation is achieved for each output.

Another object of the present invention is to provide a method and topology for controlling a multi-output forward converter in which there is no limitation in increasing number of outputs without compromising the simple control concept.

Another object of the present invention is to provide a control method for multi-output forward converters such that the method is suitable for being implemented in digital or analog fashion.

Another object of the present invention is to provide a multi-output forward converter in which none of the outputs experiences lack of power/voltage regulation at any loading conditions.

Another object of the present invention is to provide an integrated circuit for implementing the control method according to the present invention.

Further an object of the present invention is to provide a multi-output forward converter in which transformer losses are reduced at light or no load conditions such that the magnetizing current of the transformer is kept as much as necessary for the load condition.

## Summary of the Invention

The present invention proposes a multi-output forward converter topology having switch $S_k$, $k=1$, 2 ... $n$, on the forward path with an additional diode $D_{k1}$ in series with switch $S_k$. There is further provided a controller dedicated for each output to be performing voltage mode control and producing duty cycle $d_k$ for switch $S_k$. Duty cycle $d_k$ is produced by comparing the $k^{th}$ output error signal with a common saw-tooth or triangle carrier. Duty cycle of primary switch $S_m$ is extracted from the calculated duty cycles of each output in the manner that the duty cycle of $S_m$ will be the same as that of output requiring the greatest duty cycle and the duty cycles of all other outputs will be lower than $d_m$.

## Brief Description of the Figures

Accompanying drawings are given solely for the purpose of exemplifying a multi output forward converter whose advantages over prior art were outlined above and will be explained hereinafter in detail:

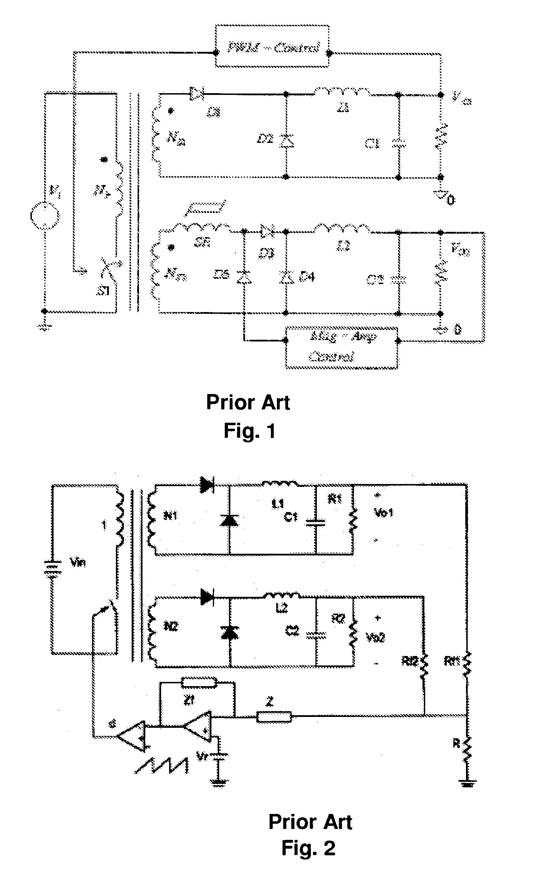

Fig. 1 demonstrates a prior art two output forward converter with a Magamp.

Fig. 2 demonstrates a prior art multi-output forward converter with WVMC.

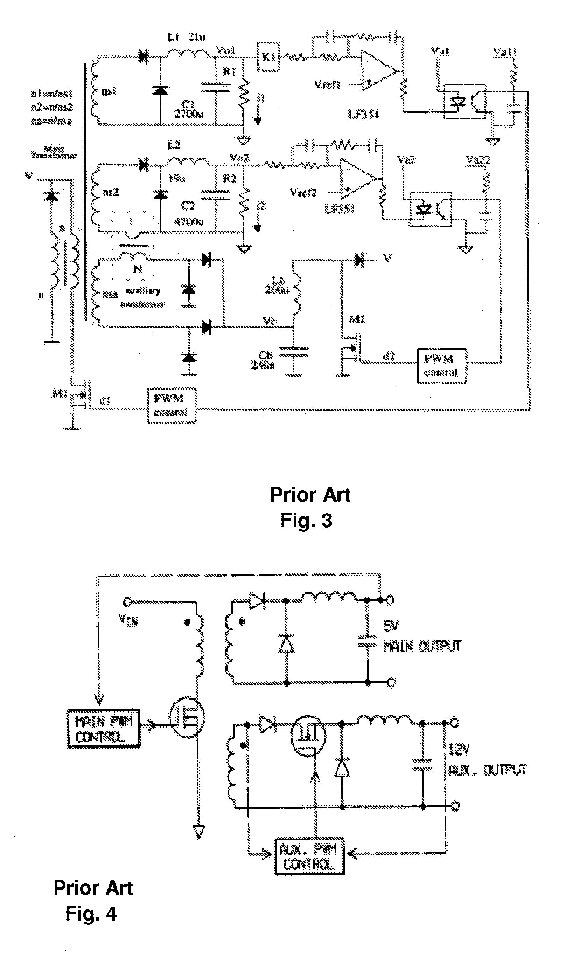

Fig. 3 demonstrates a prior art two-output forward converter controlled by parallel regulation method.

Fig. 4 demonstrates a prior art two-output forward converter with SSPR.

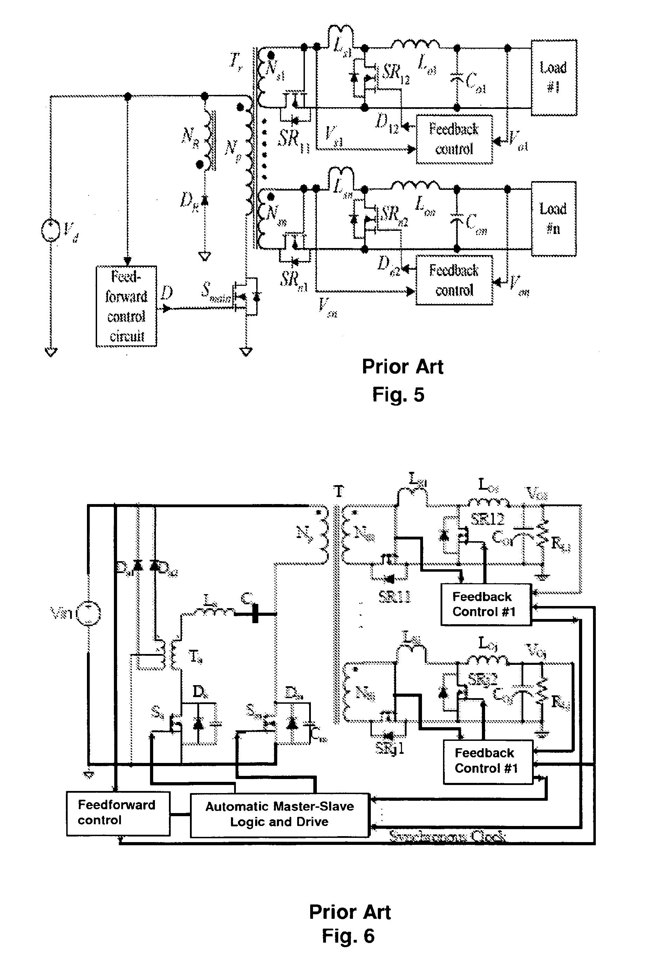

Fig. 5 demonstrates a prior art multi-output forward converter with voltage feed forward control and SSPR.

Fig. 6 demonstrates a prior art multi-output forward converter with automatic master-slave control.

Fig. 7 demonstrates the multi-output forward converter with proposed control scheme according to the present invention.

Fig. 8 demonstrates the multi-output forward converter of Fig. 7 in which diodes $D_{k1}$ and $D_{k2}$ are replaced with switches according to the present invention.

Fig. 9a and 9b demonstrates structure of output controllers at proposed multi-output forward converter according to the present invention.

Fig. 10 demonstrates structure of output controllers of Fig. 9a and 9b as a whole.

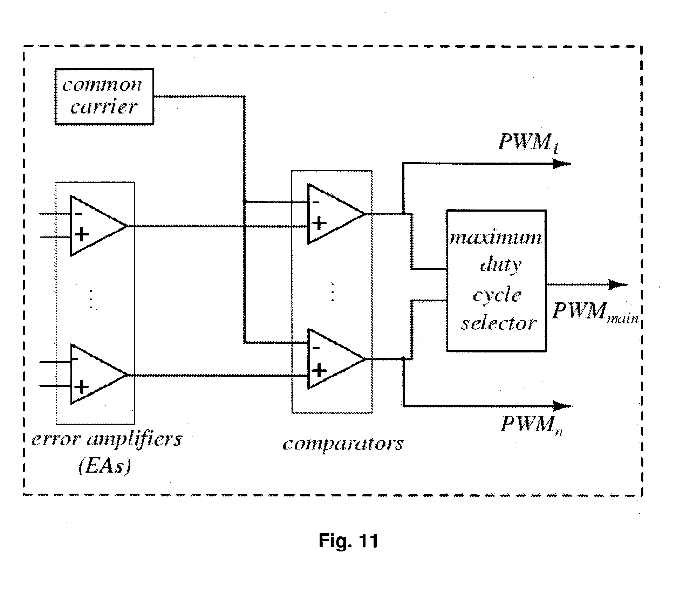

Fig. 11 demonstrates main blocks of an integrated circuit suitable for implementing the control method according to the present invention.

**Detailed Description of the Invention**

Referring now to the figures outlined above, the present invention proposes a novel multi-output forward converter topology. Each output of the converter has a controlled switch $S_k$, k=1, 2 ... n, on the forward path differing from a conventional forward converter that utilizes only one controlled switch at the primary.

With this modification each output becomes a widely known buck converter with an additional diode $D_{k1}$ in series with switch $S_k$. Transformer flux balance is achieved by a reset winding having the same number of turns with the primary winding.

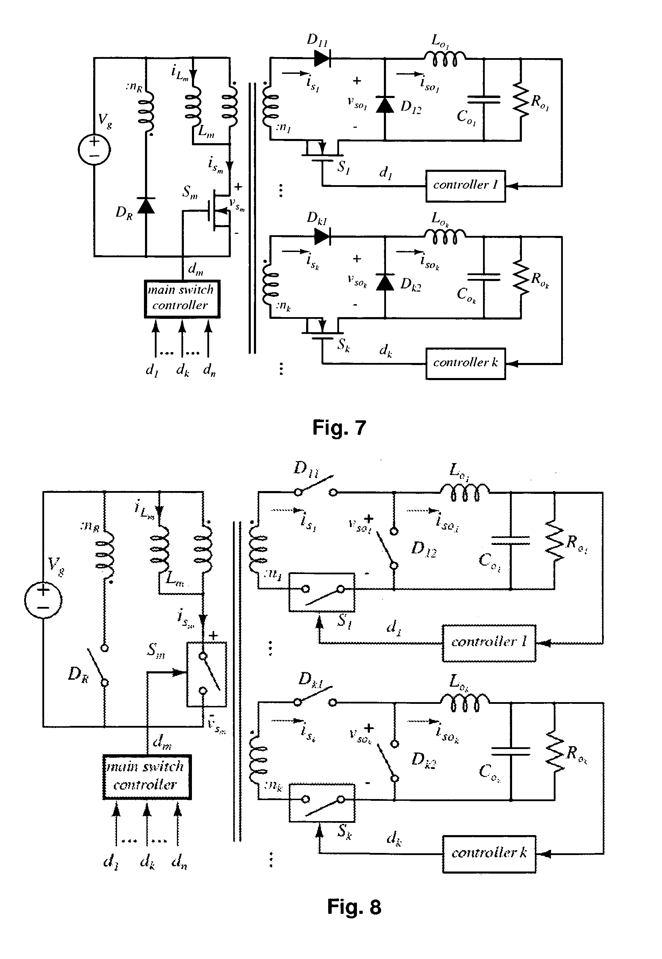

The diode $D_{k1}$ is used to prevent the reversal of current direction during discontinuous conduction mode operation and transient cases. The freewheeling diode $D_{k2}$ can be replaced with a MOSFET for synchronous rectification enabling further loss reduction for high current applications. As shown in Fig. 7, there is a dedicated controller for each output performing the necessary voltage mode control and producing duty cycle $d_k$ for switch $S_k$. Duty cycle $d_k$ is produced by comparing the $k^{th}$ output error signal with a common saw-tooth carrier.

Duty cycle of primary switch $S_m$ is extracted from the calculated duty cycles of each output. The control law for $d_m$ is very simple:

$$d_m = \max(d_1, d_2, .., d_k ..., d_n)$$

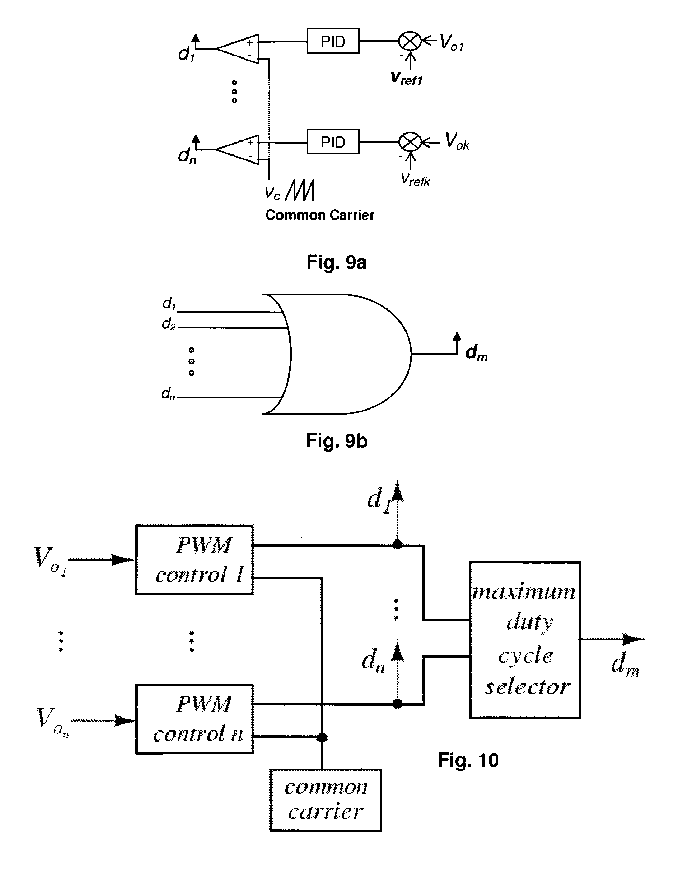

With this control scheme, the duty cycle of $S_m$ will be the same as that of output requiring the greatest duty cycle and the duty cycles of all other outputs will be lower than $d_m$. This scheme not only constitutes an automatic master-slave assignment but also guarantees that none of the outputs experiences lack of power/voltage regulation at any loading conditions. In addition, since the primary switch duty cycle is adjusted according to load and line variations (indirectly), this arrangement also reduces transformer losses, keeping the magnetizing current of the transformer just as much as necessary for the load condition. The main switch controller realizing the equation above is an OR operation as shown in Fig. 9.

In summary, the operation of the multiple-output forward converter according to the present invention is very similar to conventional forward converter except that each output power stage has different duty cycles decoupled from others. The present invention modifies conventional forward converter topology by adding extra controlled switches to outputs. Duty cycles of each output are determined by widely known method which is the comparison of a sawtooth signal and the compensated error signal. However, each output's compensated error signal is compared with a common sawtooth carrier such that all of the gating signals are synchronized. Assigning a dedicated controller for each output, duty cycle of each output is decoupled from each other. Primary switch's duty cycle information is extracted from output duty cycle values with a very simple rule which is selecting the maximum output duty cycle as the primary switch's duty cycle.

The above explained control concept have also been verified by obtained experimental and simulation results. Simulation and experimental results showed that line regulation of the experimental two-output forward converter is excellent. Results also revealed that the method of the present invention removes cross coupling between different outputs and provides precise voltage regulation independent from operation mode of any output(s). Any output may be either in continuous or discontinuous conduction mode. Any output may even operate at no load without loosing the voltage regulation. So there is no need to dummy load for auxiliary outputs as is the case for conventional master-slave based multi-output forward converters.

Simplicity of topology and control scheme according to the present invention allows large number of output designs without difficulty. Control scheme can be realized in analog or digital fashion and may be implemented as PWM IC easily. DSP or microcontroller implementation can also be of preference for hardware simplicity.

An analog integrated circuit suitable for implementing the control method according to the present invention is seen in Fig. 10. The IC is basically comprised of comparators for comparing signals from error amplifiers assigned to respective outputs with a common saw-tooth carrier and a maximum duty cycle selector block for determining the duty cycle of main switch. Alternatively, the IC according to the present invention can be based on digital electronics or mixed digital-analog electronics therefore it can be comprised of a plurality of analog digital converters, memory elements and a processor.

According to the present invention, in order for reducing switching losses and increasing duty cycle limit of the primary switch $S_m$, soft switching and active clamp techniques can be employed. In brief, the present invention proposes a forward converter with a plurality of outputs comprising a transformer having a switch $S_m$ at the primary winding in which each output of said converter comprises a switch $S_k$ on the forward path so as to be in series with a switch $S'_{k1}$. Each output of said converter comprises a controller to produce duty cycle $d_k$ for switch $S_k$ such that duty cycle of primary switch $S_m$ is extracted

from the calculated duty cycles of each output so as to be the same as the duty cycle of output requiring the greatest duty cycle.

The person skilled in the art will appreciate that the general principle of the present invention can be implemented in various ways as long as the core approach is intact. For example different feedback loops such as inductance current or input voltage feedback loops may be integrated to the general control scheme of the present invention. Further, it is also possible that every output controller performs on the basis of a different feedback signal.

## Claims

1. A forward converter with a plurality of outputs comprising a transformer having a switch ($S_m$) at the primary winding, each output of said converter comprising a switch ($S_k$) on the forward path so as to be in series with a second switch ($D_{k1}$), **characterized in that** each output of said converter further comprises a controller to produce a duty cycle ($d_k$) for said switch ($S_k$) on the forward path by comparing a respective output error signal with a common carrier signal such that duty cycle of primary switch ($S_m$) at the primary winding is extracted from the calculated duty cycles of each output so as to be the same as the duty cycle of output requiring the greatest duty cycle.

2. A forward converter as set forth in Claim 1 wherein said second switch ($D_{k1}$) is either a diode or a MOSFET.

3. A forward converter as set forth in Claim 2 wherein each of said output controllers performs either voltage or current mode control to produce duty cycle ($d_k$).

4. A forward converter as set forth in Claim 2 or 3 wherein each of said output controllers performs either any switch current, output inductance current or input voltage mode control.

5. A forward converter as set forth in Claim 2, 3 or 4 wherein control modes or types of each of said output controllers may differ from that of others.

6. A forward converter as set forth in Claim 1 or 3 wherein each of said outputs' error signal is compared with a common carrier such that all of the gating signals are synchronized for analog implementation.

7. A forward converter as set forth in Claim 1 wherein calculation of duty cycle ($d_k$) for said switch ($S_k$) on the forward path in relation to each of said output controllers and assignment of the greatest duty cycle as the duty cycle dm of said primary switch ($S_m$) is digitally implemented by way of software and embedded in a programmable electronic device.

8. A method for controlling a multiple-output forward converter having a transformer with a primary switch ($S_m$) at the primary winding and a switch ($S_k$) on the forward path so as to be in series with a second switch ($S_{k1}$,) on each output, wherein the method comprises the steps of: determining the duty cycle ($d_k$) for said switch ($S_k$) on the forward path by comparing the respective output error signal with a common carrier signal by means of a respective output controller dedicated to the output and determining the duty cycle ($d_m$) of primary switch ($S_m$) at the primary winding by selecting the maximum duty cycle value produced by output controllers.

9. A method for controlling a multiple-output forward converter as in Claim 8 wherein said second switch ($D_{k1}$) is either a diode or a MOSFET.

## Patentansprüche

1. Durchflusswandler mit mehreren Ausgängen, der einen Transformator umfasst, welcher einen Schalter ($S_m$) an der Primärwicklung aufweist, wobei jeder Ausgang des Wandlers einen Schalter ($S_k$) im Vorwärtspfad umfasst, sodass er in Reihe mit einem zweiten Schalter ($D_{K1}$) ist, **dadurch gekennzeichnet, dass** jeder Ausgang des Wandlers weiter einen Regler umfasst, um ein Tastverhältnis ($d_k$) für den Schalter ($S_k$) im Vorwärtspfad durch Vergleichen eines entsprechenden Ausgangsfehlersignals mit einem gewöhnlichen Trägersignal zu erzeugen, so dass das Tastverhältnis des Primärschalters ($S_m$) an der Primärwicklung aus den berechneten Tastverhältnissen jedes Ausgangs ausgewählt wird, um gleich dem Tastverhältnis des Ausgangs zu sein, welcher das größte Tastverhältnis erfordert.

2. Durchflusswandler gemäß Anspruch 1, wobei der zweite Schalter ($D_{K1}$) entweder eine Diode oder ein MOSFET ist.

3. Durchflusswandler gemäß Anspruch 2, wobei jeder der Ausgangsregler eine Regelung entweder im Spannungs- oder im Strombetrieb ausführt, um das Tastverhältnis ($d_k$) zu erzeugen.

4. Durchflusswandler gemäß Anspruch 2 oder 3, wobei jeder der Ausgangsregler eine Regelung entweder in einem Schalterstrom-, Ausgangsinduktionsstrom- oder Eingangsspannungsbetrieb ausführt.

5. Durchflusswandler gemäß Anspruch 2, 3 oder 4, wobei sich die Regelungsbetriebsarten oder -typen jedes der Ausgangsregler von denen der anderen unterscheiden können.

6. Durchflusswandler gemäß Anspruch 1 oder 3, wobei jedes der Ausgangsfehlersignale mit einem gewöhnlichen Träger verglichen wird, so dass alle Ansteuerungssignale für eine analoge Umsetzung synchronisiert sind.

7. Durchflusswandler gemäß Anspruch 1, wobei die Berechnung des Tastverhältnisses ($d_k$) für den Schalter ($S_k$) im Vorwärtspfad in Bezug auf jeden der Ausgangsregler und die Bestimmung des größten Tastverhältnisses als Tastverhältnis ($d_m$) des Primärschalters ($S_m$) digital mittels einer Software umgesetzt und in eine programmierbare elektronische Vorrichtung eingebettet ist.

8. Verfahren zur Steuerung eines Durchflusswandlers mit Mehrfachausgang, der einen Transformator mit einem Primärschalter ($S_m$) an der Primärwicklung und einen Schalter ($S_k$) im Vorwärtspfad aufweist, so dass er in Reihe mit einem zweiten Schalter ($S_{k1}$) an jedem Ausgang ist, wobei das Verfahren die Schritte umfasst: Bestimmen des Tastverhältnisses ($d_k$) für den Schalter ($S_k$) im Vorwärtspfad durch Vergleichen des entsprechenden Ausgangsfehlersignals mit einem gewöhnlichen Trägersignal mittels eines entsprechenden Ausgangsreglers, der dem Ausgang zugeordnet ist, und Bestimmen des Tastverhältnisses ($d_m$) des Primärschalters ($S_m$) an der Primärwicklung durch Auswählen des maximalen Tastverhältniswerts, der durch die Ausgangsregler erzeugt wurde.

9. Verfahren zur Steuerung eines Durchflusswandlers mit Mehrfachausgang gemäß Anspruch 8, wobei der zweite Schalter ($D_{K1}$) entweder eine Diode oder ein MOSFET ist.

**Revendications**

1. Un convertisseur direct avec une pluralité de sorties comprenant un transformateur ayant un interrupteur ($S_m$) au niveau de l'enroulement primaire, chaque sortie dudit convertisseur comprenant un interrupteur ($S_k$) sur le trajet vers l'avant de manière à être en série avec un second interrupteur H ($D_{k1}$), **caractérisé en ce que** chaque sortie dudit convertisseur comprend en outre un contrôleur pour produire un cycle de service ($d_k$) pour ledit interrupteur ($S_k$) sur le trajet vers l'avant en comparant un signal d'erreur de sortie respectif à un signal porteur de sorte que le cycle de service de l'interrupteur primaire ($S_m$) au niveau de l'enroulement primaire est extrait des cycles de service calculés de chaque sortie, de manière à être le même que le cycle de service de la sortie nécessitant le cycle de service le plus important.

2. Convertisseur direct selon la revendication 1, dans lequel ledit second interrupteur ($D_{k1}$) est soit une diode, soit un MOSTEC.

3. Convertisseur direct selon la revendication 2, dans lequel chacun desdits contrôleurs de sortie réalise un contrôle de mode de tension ou de courant afin de produire un cycle de service ($d_k$).

4. Convertisseur direct selon la revendication 2 ou 3, dans lequel chacun desdits contrôleurs de sortie réalise un contrôle de mode de courant, de courant d'inductance de sortie ou de tension en entrée pour n'importe quel interrupteur.

5. Convertisseur direct selon la revendication 2, 3 ou 4, dans lequel les modes de contrôle ou les types de chacun desdits contrôleurs de sortie peuvent différer de ceux des autres.

6. Convertisseur direct selon la revendication 1 ou 3, dans lequel chaque signal d'erreur desdites sorties est comparé à un porteur de sorte que tous les signaux de déclenchement sont synchronisés en vue d'une mise en oeuvre analogique.

7. Convertisseur direct selon la revendication 1, dans lequel le calcul du cycle de service ($d_k$) dudit interrupteur ($S_k$) sur le trajet vers l'avant par rapport à chacun desdits contrôleurs de sortie et l'affectation du cycle de service le plus important comme cycle de service dm dudit interrupteur primaire ($S_m$) sont mis en oeuvre de manière numérique à l'aide d'un logiciel et incorporés dans un dispositif électronique programmable.

8. Procédé pour commander un convertisseur direct à sorties multiples ayant un transformateur avec un interrupteur primaire ($S_m$) au niveau de l'enroulement primaire et un interrupteur ($S_k$) sur le trajet vers l'avant de manière à être en série avec un second interrupteur ($S_{k1}$) sur chaque sortie, dans lequel le procédé comprend les étapes consistant à: déterminer le cycle de service ($d_k$) dudit interrupteur ($S_k$) sur le trajet vers l'avant en comparant le signal d'erreur de sortie respectif à un signal porteur au moyen d'un contrôleur de sortie respectif dédié à la sortie et en déterminant le cycle de service ($d_m$) de l'interrupteur primaire ($S_m$) au niveau de l'enroulement primaire en sélectionnant la valeur de cycle de service maximale produite par les contrôleurs de sortie.

9. Procédé de commande d'un convertisseur direct à sorties multiples selon la revendication 8, dans lequel ledit second interrupteur H($D_{k1}$) est soit une diode, soit un MOSTEC.

**Prior Art**
**Fig. 1**

**Prior Art**
**Fig. 2**

7

**Prior Art
Fig. 3**

**Prior Art
Fig. 4**

**Prior Art**
**Fig. 5**

**Prior Art**
**Fig. 6**

9

**Fig. 7**

**Fig. 8**

**Fig. 9a**

**Fig. 9b**

**Fig. 10**

11

**Fig. 11**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6369525 B
- US 2003090247 A

**Non-patent literature cited in the description**

- **WEN CHAU-CHUN ; CHEN CHEM-LIN ; CHEN WEI ; JIARY JIAN.** Magamp Post Regulation for Flyback Converter. *IEEE,* 2001
- **CHEN, Q. ; LEE, F.C. ; JOVANOVIC, M.M.** Analysis and Design of Weighted Voltage Mode Control for a Multi-Output Forward Converter. *Applied Power Electronics Conference and Exposition,* 07 March 1993, 449-455
- **FERRERES, A. ; CARRASCO, J.A. ; ESPI, J.M. ; CASANS, S. ; DEDE, E.J.** Modeling of a Novel Parallel Regulation Technique in a Two Output Forward Converter. *IEEE International Symposium on Industrial Electronics,* 12 July 1999, vol. 2, 607-612
- **LIN Y. ; LIU K.H.** A New Synchronous Switch Post Regulator for Multi Output Forward Converters. *APEC'90,* 1990, 693-696
- **XI YAUHAO ; JAIN K. PRAVEEN.** A Forward Converter Topology With Independently and Precisely Regulated Multiple Outputs. *IEEE Transactions on Power Electronics,* 2003, vol. 18 (2), 648-658